# EUROPEAN PATENT APPLICATION

(11) **EP 1 516 607 A1**
(43) Date of publication of application: **23.03.2005**
(21) Application number: 04255412.1
(22) Date of filing: 07.09.2004
(51) Int. Cl.: A61G 3/08, B61K 13/04, B60N 2/24

(54) **Passenger transport vehicles with wheelchair facilities**

(30) Priority: 09.09.2003 GB 0321087
(71) Applicant: Transbus International Limited, London EC4A 4TR (GB)
(72) Inventor: Gallagher, Terence Anthony, Lancashire L39 4YH (GB)
(74) Representative: Jennings, Nigel Robin

(57) **Abstract**

A passenger transport vehicle includes a wheelchair station defined by an upstanding back support (6), a first lateral restraint (4) on one side of the back support and a second lateral restraint spaced from the first lateral restraint on the other side of the back support. The second lateral restraint comprises an elongate arm (14) which is connected at one end via a linkage to a single motor (16), which is selectively operable to move the arm (14) between a stowed position, in which it extends substantially in the vicinity of the said other side of the back support, and a deployed position, in which it extends substantially horizontally and substantially perpendicular to the back support and is laterally spaced from the said other side of the back support in the direction away from the first lateral restraint.

## Description

The present invention relates to passenger transport vehicles with wheelchair facilities, that is to say vehicles adapted to transport passengers in wheelchairs in addition to able-bodied passengers. The invention is particularly applicable to buses and coaches and may also find application in e.g. minibuses and trains.

Recent legislation in the United Kingdom requires all new public passenger transport buses to provide access for wheelchair users, in the form of a ramp, a lift or the like, and a wheelchair station at which a wheelchair and its occupant may be safely accommodated. The legislation requires that the wheelchair station comprises an open space bounded by an upright resilient back support at the rear and a side wall of the bus on one side carrying a handrail. There must also be a lateral restraint on the other side and a spacing of at least 750 mm between the side wall and the lateral restraint.

The requirement for a lateral restraint is commonly satisfied by the provision of an upstanding stanchion. However, the necessarily restricted width of a bus coupled with the requirement that the stanchion be at least 750 mm from the side wall means in practice that the stanchion has to be provided in the aisle which is commonly provided along the longitudinal centre of the bus. It thus constitutes a significant impediment to other passengers, particularly those carrying luggage at all times, that is to say even when the wheelchair station is not occupied by a wheelchair user, which is frequently the case. Furthermore, the stanchion constitutes a significant impediment to a wheelchair user attempting to gain access to the wheelchair station and in order to render access possible it is necessary to make the wheelchair station longer in the longitudinal direction of the bus than would otherwise be necessary and than is required by the legislation. This results in a reduced amount of space available for able-bodied passengers and thus in a reduction in the potential load-carrying ability of the bus.

It is thus the object of the invention to provide a passenger transport vehicle with a wheelchair station which overcomes the problems referred to above and which, in particular, fulfils the statutory requirements but results in the wheelchair station not taking up more space than is necessary and not constituting an impediment in the aisle of the bus, at least for much of the time.

According to the present invention there is provided a passenger transport vehicle, such as a bus, with a wheelchair station defined by an upstanding back support , a first lateral restraint on one side of the back support and a second lateral restraint spaced from the first lateral restraint on the other side of the back support, the second lateral restraint comprising an elongate arm which is connected at one end via a linkage to a single motor which is selectively operable to move the arm between a stowed position, in which it extends substantially vertically in the vicinity of the said other side of the back support, and a deployed position, in which it extends substantially horizontally and substantially perpendicular to the back support and is laterally spaced from the said other side of the back support in the direction away from the first lateral restraint.

Thus the use of the motor driven pivotable arm in accordance with the present invention permits a transport vehicle to comply with the legal requirements relating to the provision of a wheelchair station but nevertheless permits the commonly used stanchion, which partially blocks the aisle in the centre of the vehicle to be dispensed with. When the pivotable arm is in the deployed position, it will probably extend a small distance into the aisle but only at a height of about, say, 1 metre and will not constitute an obstruction either above or below that height. When the wheelchair station is not occupied by a wheelchair user, which is commonly the case, the arm will be in the stowed position in which it projects upwardly adjacent the side surface of the back support remote from the first lateral restraint and will not constitute an impediment at all to passengers who wish to pass down the aisle. The use of a single motor to move the pivotable arm both in rotation, that is to say through 90°, and linearly, that is to say towards and away from the back support, makes the pivotable arm both cheap and simple and readily user operable.

The linkage may include a shaft which extends substantially horizontally and substantially parallel to the back support. The shaft may extend behind the back support or be integrated into it. The length of the arm is preferably such that it does not extend substantially above the top of the back support when the arm is in the stowed position.

The linkage which translates rotational movement of the single motor into both rotational and linear movement of the pivotal arm may take various forms but it is preferred that it includes an at least partly helical formation and an engagement member cooperating with the helical formation. Thus in very simple forms of the invention, the motor could rotate e.g. a bar with an at least partly helical formation formed on its outer surface in which a peg attached to the pivotable arm is constrained to move, whereby rotation of the bar will produce the desired movement of the pivotal arm. Alternatively, the motor could be connected to move a first member linearly, for instance by rotating an externally screw threaded rod on which is received an internally screw threaded sleeve carrying a projection which extends through an at least part helical slot in a surrounding tube which is connected to the pivotable arm.

It is, however, preferred that the motor is connected to rotate a first screw threaded member which is in threaded engagement with a second screw threaded member connected to the pivotable arm, the second screw threaded member being connected to an engagement member cooperating with the at least helical formation, whereby the pattern of movement of the second screw threaded member and thus of the pivotable arm is dictated by the shape of the at least partially helical formation.

In the preferred embodiment, the first screw threaded member comprises an externally threaded rod and the second screw threaded member constitutes an internally threaded sleeve connected to or forming part of a first tube connected to the pivotable arm, in whose wall an at least partially helical slot is formed, a peg being connected to the first tube and extending through the slot.

It will be appreciated that it is highly desirable that the pivotable arm be rotationally locked in both its stowed and deployed position and cannot be moved either inadvertently or maliciously by the application of manual pressure to it. It is therefore preferred that the linkage includes locking means which cooperate when the pivotable arm is in the stowed position and/or the deployed position and mechanically lock the arm against rotary movement. In one embodiment, the first and second tubes carry locking formations adjacent their end closest to the pivotable arm which are movable into and out of engagement on relative linear movement of the first and second tubes but prevent relative rotational movement, when the pivotable arm is in the stowed position. Alternatively, or preferably additionally, the first and second tubes may carry locking formations adjacent their end furthest from the pivotable arm which are movable into and out of engagement on relative linear movement of the first and second tubes but prevent relative rotational movement, when the pivotable arm is the stowed position.

It will be appreciated that in these embodiments the rotary locks may only be released by relative linear movement of the first and second tubes and this is conveniently achieved by an embodiment in which the slot in the wall of the second tube has a straight portion extending substantially parallel to the length of the second tube at each end of the slot and a central helical portion between the two straight portions which extends around the periphery of the second tube through substantially 90°.

The first lateral restraint may take many forms. Thus it may constitute a bulkhead or a stanchion or even a further pivotable arm similar to the second lateral restraint. It is, however, preferred that it is constituted by a side wall of the vehicle.

Whilst the present invention is directed primarily to a passenger transport vehicle with a wheelchair station, the wheelchair station being defined in part by a pivotable arm connected to move both linearly and in rotation by a single motor, it is believed that this pivotable arm may have further applications, particularly for physically handicapped people, for instance for use as a restraint or support in a toilet facility for handicapped people. Accordingly, a further aspect of the present invention relates to an elongate arm, particularly for use by physically handicapped or incapacitated people, which is connected at one end via a linkage to a single motor which is selectively operable to move the arm between a stowed position, in which it extends substantially vertically, and a deployed position, in which it extends substantially horizontally, the stowed and deployed positions being offset from one another in the lateral, that is to say horizontal, direction. Such a pivotable arm may have any one or more of the various preferred features referred to above.

Further features and details of the invention will be apparent from the following description of one specific embodiment relating to a wheelchair station on a passenger carrying bus, which is given by way of example with reference to the accompanying drawings, in which:
Figure 1 is a perspective view of the wheelchair station with the pivotable arm in the stowed position;
Figure 2 is a view similar to Figure 1 with the pivotable arm in the deployed position; and
Figure 3 is an exploded view of the linkage connecting the motor and the pivotal arm.

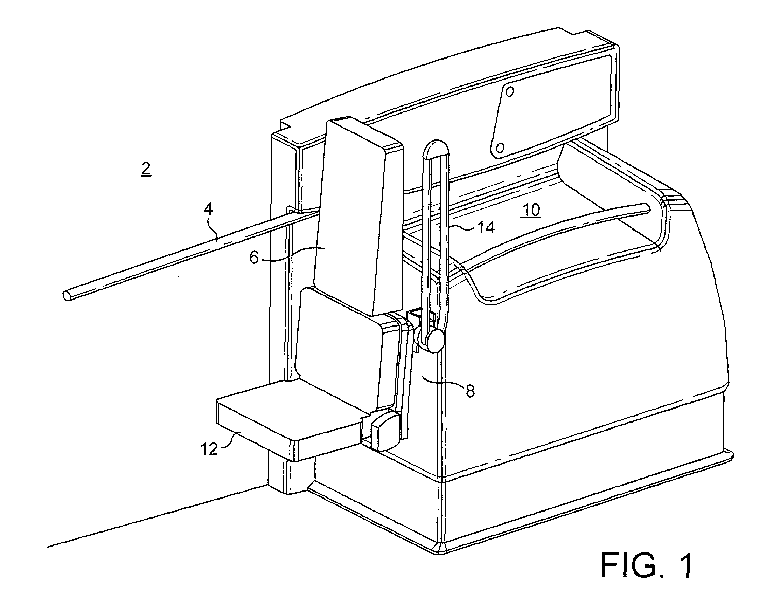

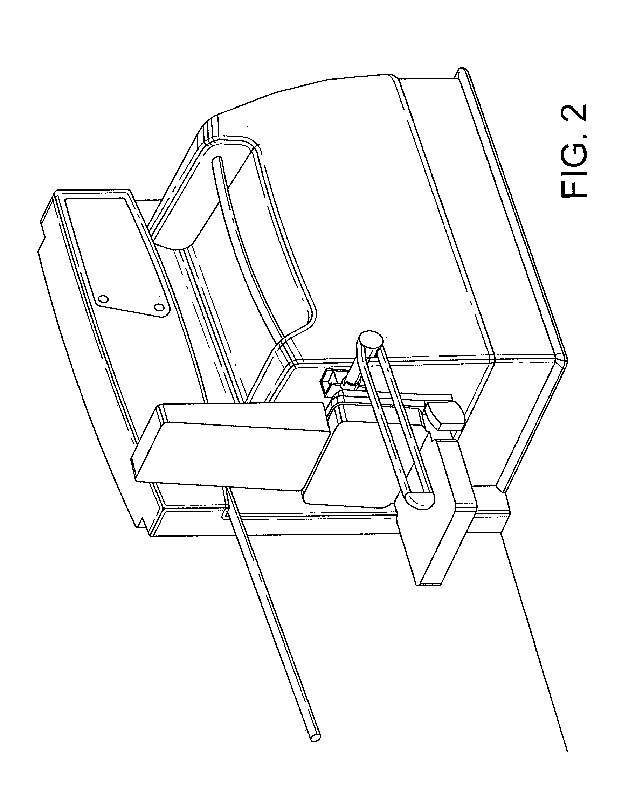

As seen in Figures 1 and 2, the wheelchair station is defined in part by a side wall 2 of a bus, connected horizontally to which is a handrail 4. Extending perpendicular to the side wall 2 and facing in the rearward direction of the bus is a cushioned back support 6. The back support may be fastened to the side wall 2 and/or the floor of the bus but in the present case it is fastened to the rear surface of a bulkhead 8 forming part of a luggage storage facility 10. Connected to the lower end of the back support 6 is a pivotable seat 12. The seat 12 may be pivoted between the deployed position shown in Figures 1 and 2 and a stowed position in which it extends upwardly parallel and adjacent to the back support. In the illustrated deployed position it may be used as a seat by an able-bodied person if the wheelchair station is not in use by a wheelchair user, as is in practice frequently the case. If a wheelchair user wishes to use the wheelchair station, the seat 12 is pivoted upwardly into the stowed position in which it does not project significantly into the space to be occupied by the wheelchair.

Situated adjacent the inner side surface remote from the side wall 2 of the back support 6 is a pivotable restraint arm 14 which is connected to a rotary shaft. This shaft is connected by means of a linkage, which will be described below, to an electric stepper motor which may be controlled by a wheelchair user by means of a switch or push button (not shown), mounted e.g. on the side wall. The linkage is so constructed that when the stepper motor is actuated will move the pivotable arm between the stowed position shown in Figure 1, in which it extends substantially vertically upwardly relatively closely adjacent the side surface of the back support, and the deployed position shown in Figure 2, in which it extends substantially horizontally and parallel to the longitudinal centreline of the bus and is spaced by a significant distance from the side surface of the back support.

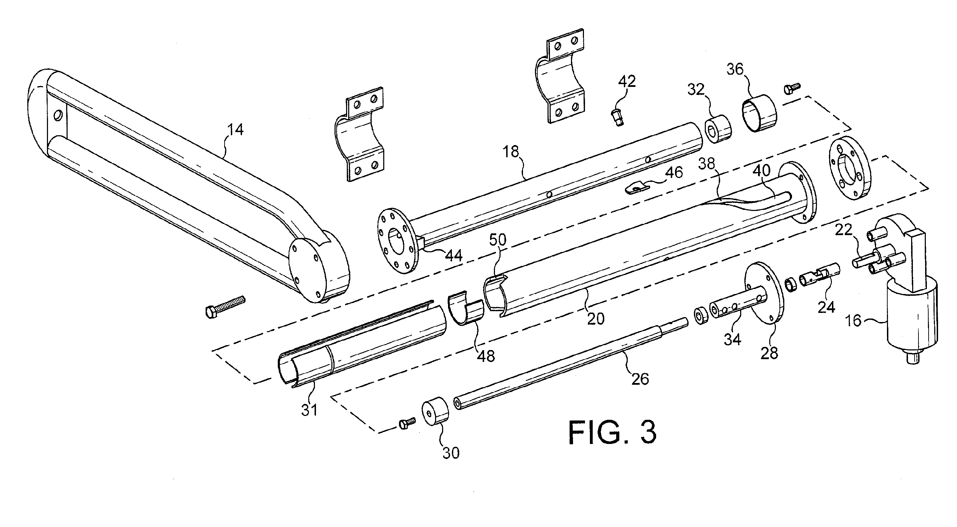

Referring now to Figure 3, it can be seen that the pivotable arm 14 is connected to an electric motor 16 by a linkage which is of complex construction and is thus shown in exploded form. The pivotable arm 14 is rigidly connected to a rotary shaft in the form of a hollow tube 18 which is accommodated within a stationary tube 20. The output shaft 22 of the motor 16 is connected via a universal joint 24 to an elongate rod 26 whose external surface is screw threaded. The rod 26 is received within the tube 18 and rotationally retained by means of an end cap 28 and a bush 30. Carried on the externally screw threaded rod 26 is an internally screw threaded sleeve 32 which is connected to the interior of the tube 18. A stub shaft 34 integral with the end plate 28 and connected to the threaded rod 26 is rotationally supported within the tube 18 by a bearing 36 in the form of a plastic sleeve and a C section flexible bearing sleeve 31. As mentioned above, the tube 18 is movably accommodated within the tube 20. Formed in the wall of the tube 20 is a slot which is divided into three portions. The central portion 38 of the slot is helical, that is to say it extends in both the longitudinal and peripheral directions. The two end portions of the slot 40, of which only one is visible, are linear and extend parallel to the length of the tube 20. A screw or the like 42, whose shaft is small enough to pass through the slot 38, 40 but whose head is not, is retained in the slot and screwed through the bearing 36 and into the wall of the tube 18.

It will therefore be appreciated that when the motor 16 is actuated the screw threaded rod 26 will be rotated. The threaded sleeve 32 carried on it, which is connected to the interior of the tube 18, is unable to rotate with it because it is restrained from rotation by the screw 42 which is secured to it and which is retained in the slot 38, 40 by its head. The threaded sleeve 32 is thus constrained to move initially linearly, that is to say with the screw moving within the first linear portion 40 of the slot. The screw then enters the helical portion 38 of the slot and continued axial movement of the threaded sleeve 32 obliges the screw 42 to follow the slot and thus to move along a helical path. When the screw then reaches the other straight section 40 of the slot, the sleeve 32 is again constrained to move in a straight line. However, the threaded sleeve 32 is connected to the tube 18 which is in turn connected to the pivotable arm 14 and this means that actuation of the motor 16, when the pivotable arm is in the stowed or upright position, will thus result in the tube 18 and the arm 14 initially moving only outwardly, that is to say away from the back rest 6, as the screw 42 follows the first straight portion 40 of the slot. The pivotable arm 14 is then caused to move further outwardly and also downwardly as the screw moves along the length of the helical portion 38 of the slot. Once the arm 14 has reached the horizontal position, it is then constrained to move a further short distance outwardly as the screw moves along the second straight portion of the slot. Since the arm 14 is required to move through substantially 90°, that is to say between the substantially vertical and horizontal positions, it is of course necessary that the helical portion 38 of the slot also turns through 90°, that is to say it extends only over substantially one-quarter of the periphery of the tube 20. The pivotable arm is thus moved smoothly between the retracted vertical position and the extended horizontal position by a single electric motor.

It will be appreciated that, when the pivotable arm is in its deployed or stowed position, it is desirable for it to be mechanically locked in that position so that it cannot be moved manually, either inadvertently or deliberately, thereby risking damaging the linkage. For this purpose, the tube 18 is provided with a pair of diametrically opposed locking projections 44 on its external surface adjacent the end to which the pivotable lever 14 is connected. It is also provided with a second locking projection 46 connected to its external surface at a position adjacent to its other end. Connected within the tube 20 at the end adjacent the pivotable arm 14 is a part-circular sleeve 48, in which a notch or groove (not visible) is formed in the edge directed towards the motor. Also formed in the end of the tube 20 adjacent the pivotable arm 14 are two diametrically opposed notches or cut-outs 50. In use, when the motor 16 is actuated to move the arm from its stowed position to its deployed position, the arm 14 moves, as explained above, initially linearly outwardly and then both outwardly and downwardly and then finally linearly outwardly again as the screw 42 moves along the second straight portion 40 of the slot situated at the left-hand end of the tube 20. At the end of this final linear movement, the locking projection 46 moves into the notch in the part-circular sleeve 48. The engagement of the projection in this notch will constitute a rotary lock in that it will prevent any rotation of the tube 18 and thus also of the pivotable arm 14 with respect to the stationary tube 20. Similarly, when the pivotable arm is moved into the stowed position, the final portion of its movement is linearly inwardly as the screw 42 moves along the straight portion 40 of the slot which is visible in Figure 3. At the end of this linear movement, the locking projections 44 on the tube 18 enter the notches 50 at the end of the tube 20 and again constitute a rotary lock. It is therefore impossible to move the pivotable arm in rotation out of either its stowed or its deployed position.

## Claims

1. A passenger transport vehicle with a wheelchair station defined by an upstanding back support, a first lateral restraint on one side of the back support and a second lateral restraint spaced from the first lateral restraint on the other side of the back support, the second lateral restraint comprising an elongate arm which is connected at one end via a linkage to a single motor which is selectively operable to move the arm between a stowed position, in which it extends substantially vertically in the vicinity of the said other side of the back support, and a deployed position, in which it extends substantially horizontally and substantially perpendicular to the back support and is laterally spaced from the said other side of the back support in the direction away from the first lateral restraint.

2. A vehicle as claimed in Claim 1 in which the linkage includes a shaft which extends substantially horizontally and substantially parallel to the back support.

3. A vehicle as claimed in Claim 2 in which the shaft extends behind the back support.

4. A vehicle as claimed in any one of the preceding claims in which the length of the arm is such that it does not extend substantially above the top of the back support when the arm is in the stowed position.

5. A vehicle as claimed in any one of the preceding claims in which the linkage includes an at least partly helical formation and an engagement member cooperating with the helical formation.

6. A vehicle as claimed in Claim 5 in which the motor is connected to rotate a first screw threaded member which is in threaded engagement with a second screw threaded member connected to the pivotable arm, the second screw threaded member being connected to an engagement member cooperating with the at least helical formation, whereby the pattern of movement of the second screw threaded member and thus of the pivotable arm is dictated by the shape of the at least partially helical formation.

7. A vehicle as claimed in any one of the preceding claims in which the first screw threaded member comprises an externally threaded rod and the second screw threaded member constitutes an internally threaded sleeve connected to or forming part of a first tube connected to the pivotable arm, in whose wall an at least partially helical slot is formed, a peg being connected to the first tube and extending through the slot.

8. A vehicle as claimed in any one of the preceding claims in which the linkage includes locking means which cooperate when the pivotable arm is in the stowed position and mechanically lock the arm against rotary movement.

9. A vehicle as claimed in any one of the preceding claims in which the linkage includes locking means which cooperate when the pivotable arm is in the deployed position and mechanically lock the arm against rotary movement.

10. A vehicle as claimed in Claims 7 and 8 in which the first and second tubes carry locking formations adjacent their end closest to the pivotable arm which are movable into and out of engagement on relative linear movement of the first and second tubes but prevent relative rotational movement, when the pivotable arm is in the stowed position.

11. A vehicle as claimed in Claims 7 and 9 in which the first and second tubes carry locking formations adjacent their end furthest from the pivotable arm which are movable into and out of engagement on relative linear movement of the first and second tubes but prevent relative rotational movement, when the pivotable arm is the stowed position.

12. A vehicle as claimed in Claim 7 in which the slot in the wall of the second tube has a straight portion extending substantially parallel to the length of the second tube at each end of the slot and a central helical portion between the two straight portions which extends around the periphery of the second tube through substantially 90°.

13. A vehicle as claimed in any one of the preceding claims in which the first lateral restraint is a side wall of the vehicle.
